(19) Europäisches Patentamt
European Patent Office
Office européen des brevets

(11) Veröffentlichungsnummer: **0 294 772 B1**

(12) # EUROPÄISCHE PATENTSCHRIFT

(45) Veröffentlichungstag der Patentschrift: **14.10.92**

(51) Int. Cl.[5]: **C08K 5/20**, C08K 9/04, C08L 67/06

(21) Anmeldenummer: **88109089.8**

(22) Anmeldetag: **08.06.88**

(54) **Gefüllte Polyesterharz-Formmasse.**

(30) Priorität: **12.06.87 DE 3719633**

(43) Veröffentlichungstag der Anmeldung:
**14.12.88 Patentblatt 88/50**

(45) Bekanntmachung des Hinweises auf die Patenterteilung:
**14.10.92 Patentblatt 92/42**

(84) Benannte Vertragsstaaten:
**DE ES FR GB IT NL**

(56) Entgegenhaltungen:
**EP-A- 0 028 841**
**EP-A- 0 153 193**
**US-A- 3 926 902**

**CHEMICAL ABSTRACTS, Band 96, Nr. 14, April 1982, Seite 38, Zusammenfassung Nr. 105249y, Columbus, Ohio, US; & JP-A-81 152 819 (MATSUSHITA ELECTRIC WORKS, LTD) 26-11-1981**

(73) Patentinhaber: **BASF Aktiengesellschaft**
**Carl-Bosch-Strasse 38**
**W-6700 Ludwigshafen(DE)**

(72) Erfinder: **Holoch, Jan, Dr.**
**Koenigsberger Strasse 22a**
**W-6906 Leimen(DE)**
Erfinder: **Hesse, Anton, Dr.**
**Peter-Nickel-Strasse 15**
**W-6940 Weinheim(DE)**
Erfinder: **Lang, Reinhold, Dr.**
**Hauptstrasse 42**
**W-6900 Heidelberg(DE)**
Erfinder: **Trautmann, Walter, Dr.**
**Ritterbüschel 87**
**W-6730 Neustadt(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services

## Beschreibung

Ungesättigte Polyesterharze werden sehr häufig zusammen mit Füllstoffen verarbeitet. Besondere Bedeutung haben SMC (sheet molding compound)- und BMC (bulk molding compound)-Massen, die vorzugsweise mit Calciumcarbonat gefüllt sind, sowie Formmassen, die durch Aluminiumoxidhydrat flammfest ausgerüstet sind. Oft sind diese Massen faserverstärkt, wobei insbesondere Glasfasern verwendet werden. Während die Verbesserung der Faser-Matrix-Haftung durch Beschichtung der Glasfasern mit Silanen, z.B. mit 3-(Trimethoxysilyl)-propylmethacrylat, seit langer Zeit bekannt ist, gibt es bisher nur wenige Versuche, die Anbindung von Füllstoffen an die Matrix zu verbessern. Bekannt ist die Beschichtung von $CaCO_3$ mit längerkettigen Fettsäuren zur Reduzierung der Formmassenviskosität (EP-A 153 193). Wegen des teilweise sehr hohen Füllgrades der Formmassen ist zu erwarten, daß die mechanischen Eigenschaften des Formstoffs in einem starken Maße durch die Matrix-Füllstoff-Grenzschicht bestimmt werden.

Es wurde nun gefunden, daß die kritische Energiefreisetzungsrate ($G_{IC}$-Wert) und die Rißzähigkeit ($K_{IC}$-Wert) von gefüllten Polyesterharz-Platten deutlich erhöht werden, wenn der Füllstoff mit einer Maleinamidsäure beschichtet wurde. Überraschenderweise wurde derselbe Effekt auch dann beobachtet, wenn unbeschichteter Füllstoff zusammen mit Maleinamidsäure der Formmasse zugesetzt werden.

Gegenstand der Erfindung ist demnach eine härtbare Polyester-Formmasse aus

A. einem ungesättigten Polyester,

B. 10-90 %, bezogen auf A + B, einer mit A copolymerisierbaren Verbindung,

C. 5-300 %, bezogen auf A + B, eines anorganischen Füllstoffs,

D. 0,1-10 %, bezogen auf A + B, einer organischen Säure,

E. gegebenenfalls weiteren üblichen Zusatzstoffen

dadurch gekennzeichnet, daß die organische Säure eine Maleinamidsäure der Struktur

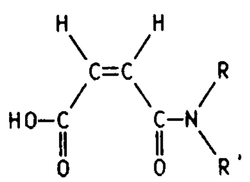

ist, wobei R eine Alkyl-, Alkenyl-, Alkinyl-, Aryl-, Alkylaryl-Gruppe mit maximal 30 Kohlenstoffatomen und R′ Wasserstoff oder R bedeuten.

Zu den Komponenten ist im einzelnen zu sagen:

A. Als ungesättigte Polyester A eignen sich die üblichen Kondensationsprodukte aus mehrwertigen, insbesondere zweiwertigen Carbonsäuren und deren veresterbaren Derivaten, insbesondere deren Anhydride, die mit mehrwertigen, insbesondere zweiwertigen Alkoholen esterartig verknüpft sind, und gegenbenenfalls zusätzliche Reste einwertiger Carbonsäuren oder einwertiger Alkohole enthalten, wobei zumindest ein Teil der Einsatzstoffe über ethylenisch ungesättigte, copolymerisationsfähige Gruppen verfügen muß.

Als Alkoholkomponenten eignen sich z.B. Ethylenglykol, Propylenglykol-1,2, Propandiol-1,3, Butandiol-1,3, Butandiol-1,4, Hexandiol-1,6, Hexantriol-1,2,6, Neopentylglykol, Diethylenglykol, Triethylenglykol, Dipropylenglykol, Cyclohexandiol-1,2, hydriertes Bisphenol A, Cyclohexandimethanol, ethoxyliertes Bisphenol A sowie Dihydroxymethyltricyclodecan, Trimethylolpropan, Glycerin und Pentaerythrit.

Geeignete Carbonsäuren bzw. deren Derivate sind zweibasische olefinisch ungesättigte Carbonsäuren, wie z.B. Maleinsäure, Fumarsäure, Chlormaleinsäure, Itaconsäure, Citraconsäure, Methylenglutarsäure und Mesaconsäure bzw. deren Ester oder vorzugsweise deren Anhydride. In die Polyester können andere modifizierend wirkende zweibasische, ungesättigte und/oder gesättigte, sowie aromatische Carbonsäuren eingebaut werden, z.B. Bernsteinsäure, Glutarsäure, Adipinsäure, Sebacinsäure, Phthalsäureanhydrid, o-Phthalsäure, Isophthalsäure, Terephthalsäure, Tetrahydrophthalsäure und Endomethylentetrahydrophthalsäure.

Die ungesättigten Polyester können mit Dicyclopentadien bzw. dessen Derivaten oder Substitutionsprodukten modifiziert sein. Diese Umsetzungen sind bekannt. Wenn man von Diestern mit hoher Säurezahl oder freier Maleinsäure ausgeht und bei Temperaturen zwischen 120 und 140 °C arbeitet, erhält man im wesentlichen eine Addition des Dicyclopentadiens an endständige Carboxyl- bzw. Hydroxylgruppen, wobei sich endständige Dihydrodicyclopentadienylether- bzw. Dihydrodicyclopentadienylestergruppen bilden. Setzt man Polyester mit niedriger Säurezahl ein und arbeitet bei höheren Temperaturen, vorzugsweise oberhalb von 170 ° C, so spaltet sich das Dicyclopentadien in zwei Moleküle Cyclopentadien, welches sich an Ethylendicarbonsäureester-Strukturen des Polyesters addiert und Endomethylentetrahydrophthalsäureester-Strukturen bildet.

B. Als copolymerisierbare, ethylenisch ungesättigte monomere Verbindungen B kommen die üblicherweise zum Herstellen ungesättigter Polyesterformmassen verwendeten Allyl- und vorzugsweise Vinylverbindungen in Frage, Vinylaromaten, wie Styrol, substituierte Styrole, wie p-Chlorstyrol oder Vinyltoluol, Ester der Acrylsäure und Methacrylsäure mit 1 bis 18 Kohlenstoffatome enthaltenden Alkoholen, wie Methacrylsäuremethylester, Acrylsäurebutylester, Ethylhexylacrylat, Hydroxypropylacrylat, Dihydrodicyclopentadienylacrylat, Butandioldiacrylat und (Meth)-acrylsäureamide, Allylester, wie Diallylphthalat, und Vinylester, wie Ethylhexansäurevinylester, Vinylacetat, Vinylpropionat, Vinylpivalat und andere. Desgleichen eignen sich Gemische der genannten olefinisch ungesättigten Monomeren. Bevorzugt geeignet als Komponente B sind Styrol, p-Methylstyrol, Chlorstyrol, Vinyltoluol, Divinylbenzol und Diallylphthalat. Die Komponente B ist in den Polyesterformmassen im allgemeinen in einer Menge von 10 bis 90, vorzugsweise von 20 bis 70 Gew.-%, bezogen auf das Gesamtgewicht der Komponenten A + B enthalten.

C. Geeignete Füllstoffe sind übliche feinpulvrige oder körnige anorganische Füllstoffe, wie Kreide, Kaolin, Quarzmehl, Dolomit, Schwerspat, Metallpulver, Aluminiumoxidhydrat, Zement, Talkum, Kieselgur sowie Pigmente.

D. Die Komponente D wird durch Umsetzung von Maleinsäureanhydrid mit einem primären oder sekundären Amin dargestellt. Als Amine kommen z.B. in Frage: Ethylamin, Diethylamin, Propylamin, Butylamin, 2-Ethylhexylamin, Laurylamin, Stearylamin, Palmitylamin, Oleylamin, Benzylamin, Anilin. Besonders bevorzugt sind die Umsetzungsprodukte von Maleinsäureanhydrid und längerkettigen primären Aminen.

Die Komponente D wird entweder der Formmasse zugesetzt oder in einem separaten Arbeitsgang vor dem Vermischen der Komponenten auf den Füllstoff aufgebracht. Die Füllstoffbeschichtung erfolgt nach bekannten Methoden. Da die Komponente D auch dann die Füllstoff-Matrix-Haftung verbessert, wenn sie der Formmasse zugesetzt wird, ist anzunehmen, daß die Maleinamidsäure, die im Polyesterharz gelöst vorliegt, beim Mischen mit dem Füllstoff auf diesen aufzieht und während des Härtungsvorgangs die Anbindung des Füllstoffs an die Matrix bewirkt.

E. Als weitere übliche Zuzatzstoffe kommen in Frage

- Verstärkungsfasern, wie Glas-, Kohlenstoff-, Asbest- und Cellulosefasern, sowie synthetische organische Fasern, z.B. aus Polyethylen, Polycarbonsäureestern, Polycarbonat oder Polyamiden,
- Inhibitoren, wie Hydrochinone, Chinone, Nitrobenzole, N-Nitrosoverbindungen, Salze des zweiwertigen Kupfers und quarternäre Ammoniumsalze,
- Polymerisationsinitiatoren, wie Benzoylperoxid, Methylethylketonperoxid, tert.-Butylperoktoat, tert.-Butylperbenzoat, Cyclohexanonperoxid, Acetylacetonperoxid, Perketale, Percarbonate, C-C-labile Verbindungen und Azoverbindungen,
- Härtungsbeschleuniger, z.B. Oktoate oder Naphthenate von Kupfer, Blei, Calcium, Magnesium, Cer und insbesondere von Mangan und Kobalt; ferner aromatische Amine, wie Dimethylanilin und Diethylanilin,
- Schrumpfmindernde Polymerisate, wie Polystyrol, Polymethylmethacrylat, Polyvinylacetat, Polyethylen, Polybutadien und Pfropfcopolymere, Copolymere sowie Kondensationspolymere, wie gesättigte Polyester oder Polyesterurethane,
- Elastifizierende Zusätze, z.B. kautschukartige Blockcopolymere und modifiziertes Polytetrahydrofuran,
- Eindickmittel, wie Oxide oder Hydroxide des Lithiums, Magnesiums, Calciums, Aluminiums oder Titans,
- Eindickungsbeschleuniger, z.B. Ammoniumchloride, Phosphoniumchloride, Sulfoniumhalogenide, Wasser, Polyole oder Propandiol-1,2,
- Gleitmittel, wie Zink-, Magnesium- und Calciumstearat sowie Polyalkylenetherwachse,
- Paraffine zur Verminderung der Monomerenverdunstung und zur Ausbildung einer klebfreien Oberfläche.

Der Einfluß des Zusatzes D auf die Füllstoff-Matrix-Haftung und damit auf die mechanischen Eigenschaften des Formteils wurde mit Hilfe der Bruchmechanik an mit $CaCO_3$ gefüllten Platten untersucht. Gemessen wurde die Rißzähigkeit ($K_{IC}$) nach ASTM E-399. Aus dieser läßt sich mit Hilfe des ebenfalls nach ASTM E-399 bestimmten E-Moduls die kritische Energiefreisetzungsrate nach der Formel $G_{IC} = K_{IC}^2/E$ errechnen. Der $G_{IC}$-Wert entspricht dem Energiebetrag, der beim Rißwachstum je neugeschaffener Rißflächeneinheit aufgebracht werden muß. Je höher der $G_{IC}$-Wert ist, desto mehr Energie wird beim Rißwachstum im Material vernichtet. Der $G_{IC}$-Wert ist damit ein direktes Maß für die Zähigkeit eines Formstoffs, insbesondere bei hochgefüllten Harzmassen.

Die in den folgenden Beispielen genannten Teile und Prozente beziehen sich auf das Gewicht.

Beispiel

Ungesättigtes Polyesterharz

223 Teile Isophthalsäure, 110 Teile Propylenglykol und 212 Teile Diethylenglykol werden unter Rühren und Darüberleiten von Stickstoff innerhalb von 4 Stunden auf 190 ° C erhitzt. Bei dieser Temperatur wird die Veresterung bis Säurezahl 10 fortgesetzt. 196 Teile Maleinsäureanhydrid werden hinzugefügt, und es wird bis Säurezahl 35 kondensiert. 650 Teile des so erhaltenen ungesättigten Polyesters werden nach Zugabe von 0,1 Teilen Hydrochinon bei 120 ° C in 350 Teilen Styrol gelöst.

N-Laurylmaleinamidsäure

92 Teile Dodecylamin und 400 Teile Essigester werden auf 40 ° C erwärmt, wobei eine klare Lösung entsteht. 49 Teile Maleinsäureanhydrid in 300 Teilen Essigester werden innerhalb von 30 Minuten hinzugefügt. Bei der leicht exothermen Reaktion steigt die Temperatur auf 60 ° C. Bei dieser Temperatur wird weitere 4 Stunden gerührt. Nach dem Abkühlen auf 20 ° C wird das Produkt filtriert und getrocknet. 135 Teile Laurylmaleinamidsäure werden isoliert (95,4 % der Theorie).

N-(2-Ethylhexyl)-maleinamidsäure

N-(2-Ethylhexyl)maleinamidsäure wird analog N-Laurylmaleinamidsäure hergestellt; anstelle von Dodecylamin werden 64,5 Teile 2-Ethyl-1-hexylamin eingesetzt.

N-Octylmaleinamidsäure

N-Octylmaleinamidsäure wird analog N-Laurylmaleinamidsäure hergestellt; anstelle von Dodecylamin werden 64,5 Teile n-Octylamin eingesetzt.

N-Oleylmaleinamidsäure

N-Oleylmaleinamidsäure wird analog N-Laurylmaleinamidsäure hergestellt; anstelle von Dodecylamin werden 133,5 Teile n-Oleylamin eingesetzt.

Herstellung des Formstoffs (Methode A)

150 Teile $CaCO_3$ (Millicarb) werden mit einer Lösung von 2,5 Teilen Maleinamidsäure in 60 Teilen Ethanol durchtränkt. Nach 3 Stunden wird der Füllstoff im Umluftofen getrocknet. Der Füllstoff wird mit 100 Teilen des ungesättigten Polyesterharzes gemischt. 4 mm dicke Platten werden mit 5 Teilen Methylethylketonperoxid (MEKP-HA2, Peroxid-Chemie) und 0,5 Teilen Kobaltnaphthenat (1 % in Styrol) bei Raumtemperatur gehärtet. Es wird 5 Stunden bei 120 ° C nachgehärtet.

Herstellung des Formstoffes (Methode B)

2,5 Teile Maleinamidsäure werden in 100 Teilen des ungesättigten Polyesterharzes in der Wärme gelöst. 150 Teile $CaCO_3$ (Millicarb) werden eingearbeitet. Die Formmasse wird analog Methode A gehärtet.

Untersuchung der Zähigkeit

| Maleinamidsäure | Methode | $K_{IC}$ [MPa•$m^{1/2}$] | E-Modul [N/$mm^2$] | $G_{IC}$ [J/$m^2$] |
|---|---|---|---|---|
| - | B | 0,873 | 10920 | 68,71 |
| Ethylhexyl | A | 0,859 | 9960 | 76,23 |
| Ethylhexyl | B | 0,869 | 10560 | 70,82 |
| Octyl | A | 0,870 | 10580 | 71,60 |
| Octyl | B | 0,910 | 11370 | 72,86 |
| Oleyl | A | 0,933 | 10140 | 89,06 |
| Oleyl | B | 0,951 | 10480 | 85,84 |
| Lauryl | A | 0,978 | 10110 | 94,54 |
| Lauryl | B | 1,070 | 10180 | 114,5 |

**Patentansprüche**
**Patentanspruch für folgende Vertragsstaaten : DE, FR, GB, IT, NL**

**1.** Härtbare Polyesterharz-Formmasse aus
A. einem ungesättigten Polyester,
B. 10-90 %, bezogen auf A + B, einer mit A copolymerisierbaren Verbindung,
C. 5-300 %, bezogen auf A + B, eines anorganischen Füllstoffs,
D. 0,1-10 %, bezogen auf A + B, einer organischen Säure,
E. gegebenenfalls weiteren üblichen Zusatzstoffen
dadurch gekennzeichnet, daß die organische Säure eine Maleinamidsäure der Struktur

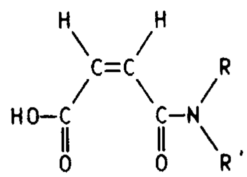

ist, wobei R eine Alkyl-, Alkenyl-, Alkinyl-, Aryl-, Alkylaryl-Gruppe mit maximal 30 Kohlenstoffatomen und R′ Wasserstoff oder R bedeuten.

**Patentanspruch für folgenden Vertragsstaat : ES**

**1.** Verfahren zur Herstellung einer härtbaren Polyesterharz-Formmasse durch Vermischen von
A. einem ungesättigten Polyester,
B. 10-90 %, bezogen auf A + B, einer mit A copolymerisierbaren Verbindung,
C. 5-300 %, bezogen auf A + B, eines anorganischen Füllstoffs,
D. 0,1-10 %, bezogen auf A + B, einer organischen Säure,
E. gegebenenfalls weiteren üblichen Zusatzstoffen
dadurch gekennzeichnet, daß die organische Säure eine Maleinamidsäure der Struktur

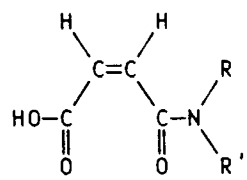

ist, wobei R eine Alkyl-, Alkenyl-, Alkinyl-, Aryl-, Alkylaryl-Gruppe mit maximal 30 Kohlenstoffatomen und R′ Wasserstoff oder R bedeuten.

**Claims**
**Claim for the following Contracting States : DE, FR, GB, IT, NL**

**1.** A curable polyester resin molding material composed of

A. an unsaturated polyester,

B. 10-90%, based on A + B, of a compound which is copolymerizable with A,

C. 5-300%, based on A + B, of an inorganic filler,

D. 0.1-10%, based on A + B, of an organic acid,

E. optionally further customary additives,

wherein the organic acid is a maleamic acid of the structure

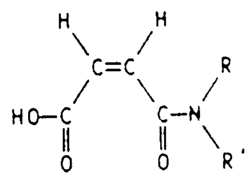

where R is alkyl, alkenyl, alkynyl, aryl or alkylaryl of not more than 30 carbon atoms and R' is hydrogen or R.

**Claim for the following Contracting State : ES**

**1.** A process for preparing a curable polyester resin molding material by mixing

A. an unsaturated polyester,

B. 10-90%, based on A + B, of a compound which is copolymerizable with A,

C. 5-300%, based on A + B, of an inorganic filler,

D. 0.1-10%, based on A + B, of an organic acid,

E. optionally further customary additives,

wherein the organic acid is a maleamic acid of the structure

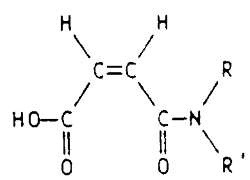

where R is alkyl, alkenyl, alkynyl, aryl or alkylaryl of not more than 30 carbon atoms and R' is hydrogen or R.

**Revendications**

**Revendication pour les Etats contractants suivants : DE, FR, GB, IT, NL**

**1.** Masse à mouler à base de résine de polyester durcissable, composée

A. d'un polyester insaturé,

B. de 10-90%, par rapport à A + B, d'un composé copolymérisable avec A,

C. de 5-300%, par rapport à A + B, d'une charge inorganique,

D. de 0,1-10%, par rapport à A + B, d'un acide organique,

E. éventuellement d'autres additifs usuels,

caractérisée en ce que l'acide organique est un acide maléamidique de structure

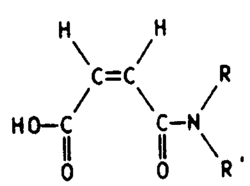

R représentant un groupement alkyle, alcényle, alcynyle, aryle, aralkyle à 30 atomes de carbone au maximum et R' représentant un atome d'hydrogène ou R.

**Revendication pour l'Etat contractant suivant : ES**

**1.** Procédé de préparation d'une masse à mouler à base de résine de polyester durcissable, par mélange
A. d'un polyester insaturé,
B. de 10-90%, par rapport à A + B, d'un composé copolymérisable avec A,
C. de 5-300%, par rapport à A + B, d'une charge inorganique,
D. de 0,1-10%, par rapport à A + B, d'un acide organique,
E. éventuellement d'autres additifs usuels,
caractérisé en ce que l'acide organique est un acide maléamidique de structure

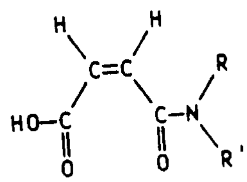

R représentant un groupement alkyle, alcényle, alcynyle, aryle, aralkyle à 30 atomes de carbone au maximum et R' représentant un atome d'hydrogène ou R.